**Europäisches Patentamt**

**European Patent Office**

**Office européen des brevets**

(19)

(11) Veröffentlichungsnummer : **0 374 126 B1**

(12) # EUROPÄISCHE PATENTSCHRIFT

(45) Veröffentlichungstag der Patentschrift :
**30.09.92 Patentblatt 92/40**

(51) Int. Cl.$^5$ : **C02F 1/48**, B01J 19/08

(21) Anmeldenummer : **89890320.8**

(22) Anmeldetag : **13.12.89**

(54) Vorrichtung zur magnetischen Behandlung von flüssigen Medien.

(30) Priorität : **14.12.88 AT 3052/88**
**08.05.89 AT 1085/89**

(43) Veröffentlichungstag der Anmeldung :
**20.06.90 Patentblatt 90/25**

(45) Bekanntmachung des Hinweises auf die
Patenterteilung :
**30.09.92 Patentblatt 92/40**

(84) Benannte Vertragsstaaten :
**BE CH DE ES FR GB GR IT LI LU NL SE**

(56) Entgegenhaltungen :
**DE-A- 3 632 257**

(56) Entgegenhaltungen :
**US-A- 4 288 323**
**US-A- 4 407 719**
**US-A- 4 427 544**
**US-A- 4 731 186**

(73) Patentinhaber : **Stolz, Siegbert**
**Pradler Saggen 10**
**A-6020 Innsbruck Tirol (AT)**

(72) Erfinder : **Stolz, Siegbert**
**Pradler Saggen 10**
**A-6020 Innsbruck Tirol (AT)**

(74) Vertreter : **Itze, Peter, Dipl.-Ing. et al**
**Patentanwälte Casati, Wilhelm, Dipl.-Ing. Itze,**
**Peter, Dipl.-Ing. Amerlingstrasse 8**
**A-1061 Wien (AT)**

## Beschreibung

Die Erfindung bezieht sich auf eine Vorrichtung zur magnetischen Behandlung von flüssigen Medien, bei welcher das Medium an einem oder mehreren in Strömungsrichtung hintereinanderliegenden Elektromagneten entlanggeführt ist, wobei der Einlaßkanal bzw. der Auslaßkanal für die Flüssigkeit quer zur Strömungsrichtung mündet.

Bei einer bekannten Ausbildung dieser Art handelt es sich um eine rohrförmige Behandlungskammer, um welche herum Elektromagnete gewunden sind. Es handelt sich dabei um gegensätzlich beaufschlagte Windungen, welche untereinander durch ein Joch verbunden sind. Die bekannte Ausbildung hat den Nachteil, daß die Feldlinien parallel zur Strömungsrichtung der zu behandelnden Flüssigkeit verlaufen. Dadurch entstehen innerhalb der zu behandelnden Flüssigkeit nicht definierbare Feldstärken, so daß eine gleichmäßige Behandlung des gesamten Flüssigkeitssromes nicht möglich ist.

Der Erfindung liegt die Aufgabe zugrunde, eine Vorrichtung der eingangs genannten Art zu schaffen, bei welcher eine hohe, gleichmäßige magnetische Feldstärke in der Flüssigkeit erzielt wird.

Erfindungsgemäß wird diese Aufgabe dadurch gelöst, daß die Kerne der Elektromagnete, und damit deren Kraftfelder, quer zur Strömungsrichtung der Flüssigkeit angeordnet sind, wobei durch den Kanal die Flüssigkeit in dünner Schicht an den Stirnflächen der Kerne der Elektromagnete vorbeiführbar ist. Dadurch wird erreicht, daß die Kraftfelder die zu behandelnde Flüssigkeit quer durchsetzen, wodurch durch die Maßnahme, daß die Flüssigkeit in dünner Schicht an den Stirnflächen der Kerne vorbeiführbar ist, eine hohe Energiedichte innerhalb der Flüssigkeit erreicht wird. Außerdem herrscht innerhalb der Flüssigkeit ein definiertes Feld, wobei die größte Feldliniendichte im Bereich des Strömungskanals liegt.

Vorteilhafterweise können die Elektromagnete an der dem Einlaßkanal bzw. dem Auslaßkanal gegenüberliegenden Wandung angebracht sein, wobei in dieser Wandung, dem Einlaßkanal bzw. dem Auslaßkanal gegenüberliegend, Umlenkkammern angeordnet sind. Durch diese Umlenkkammern erfolgt eine Wirbelbildung bzw. eine walzenartige Bewegung innerhalb des Strömungskanals, wodurch die an den Magneten entlanggeführten Schichten immer erneuert werden, so daß die gesamte durchgeführte Medienmenge entsprechend dem Magnetfluß ausgesetzt ist.

Für eine besonders hohe Wirksamkeit der Elektromagnete können die vom Strömungskanal der Flüssigkeit abgewandten Enden der Kerne der Elektromagnete durch eine Platte aus magnetisierbarem Material verbunden sein. Eine weitere Erhöhung der Feldliniendichte kann dadurch erreicht werden, wenn die den Einlaßkanal und den Auslaßkanal aufweisende Wandung aus magnetisierbarem Material gefertigt ist. Um sicherzustellen, daß auch die gesamte Breite des Kanals durch die Feldlinien hindurchgeführt wird, kann der Durchmesser der Kerne der Elektromagnete größer als die Breite des Kanals sein.

In weiterer Ausbildung der Erfindung ist der das flüssige Medium vom Einlaßkanal zum Auslaßkanal führende Strömungskanal an seiner den Elektromagneten zugewandten Wandung mit einer dünnen, nicht magnetisierbaren Folie, die Stirnwände der Magnetkerne dicht überdeckend, ausgekleidet. Dadurch wird erreicht, daß innerhalb des Strömungskanals ein geringerer Strömungswiderstand auftritt, wobei zudem die Stirnseiten der Elektromagneten nicht mehr direkt mit der zu behandelnden Flüssigkeit in Kontakt kommen, so daß sich einerseits das Verzinken der Eisenkerne und anderseits auch entsprechende Dichtungen zum Abdichten des Kernes innerhalb der Trägerplatte erübrigen.

Für eine weitere Erhöhung der Wirksamkeit können die Elektromagnete über eine Einrichtung zum periodischen Polwechseln mit Strom beaufschlagt sein, wodurch das Auftreten eines Polarisationseffektes, wie bei Magneten mit immer gleichgerichteter Polung auftreten kann, vermieden ist. Dadurch ist auch eine aufgrund des Polarisationseffektes auftretende Abschwächung der Wirkung des Magnetismus auf das Wasser vermieden.

In der Zeichnung ist ein Ausführungsbeispiel des Erfindungsgegenstandes dargestellt.

Fig. 1 zeigt einen Vertikalschnitt durch die gesamte Ausbildung.

Fig. 2 ist eine Unteransicht bei abgenommener, den Einlaßkanal und den Auslaßkanal aufweisenden Platte, und zwar einer maßstabmäßig etwas abgeänderten Ausführungsform.

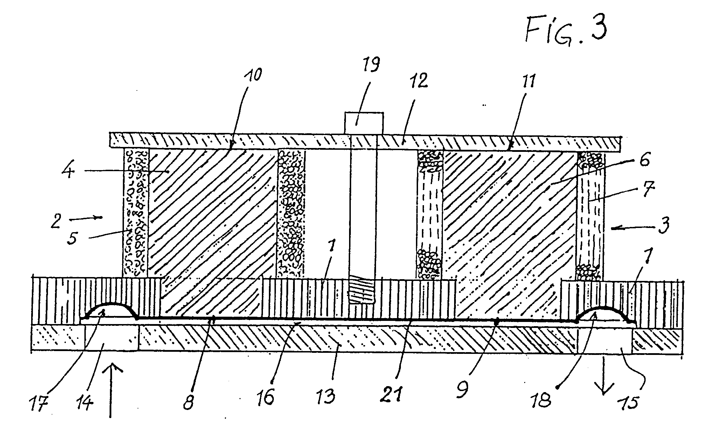

Fig. 3 zeigt eine der Fig. 1 analoge Darstellung einer abgewandelten Ausführungsform.

In einer aus magnetisierbarem Material vorgesehenen Platte 1 sind, senkrecht von ihr abstehend, zwei Elektromagnete 2, 3 angeordnet, und zwar derart, daß die Kerne 4 bzw. 6 der Elektromagnete mit ihren Stirnflächen 8, 9 bis an die Oberfläche der Platte 1 ragen. Mit 5 und 7 sind die Spulen der Elektromagnete 2 und 3 bezeichnet. Mit 10 und 11 sind die von der Platte 1 abstehenden Enden der Elektromagnete 2, 3 bezeichnet, welche durch eine Platte aus magnetisierbarem Material 12 miteinander verbunden sind. Den Elektromagneten gegenüberliegend ist an der Platte 1 eine Platte 13 befestigt, in welcher der Einlaßkanal 14 bzw. der Auslaßkanal 15 für die zu behandelnde Flüssigkeit ein- bzw. ausmündet. Innerhalb der Platte 1 ist ein Durchflußkanal 16 eingearbeitet, z.B. eingefräst, durch welchen hindurch die zu behandelnde Flüssigkeit in dünner Schicht an

2

den Stirnflächen 8, 9 der elektromagnete 2, 3 entlanggeführt wird. Gegenüber dem Einlaßkanal ist eine Wirbelkammer 17, und gegenüber dem Auslaßkanal eine Wirbelkammer 18 vorgesehen, durch welche eine Durchwirbelung der durch den Kanal 14 eingebrachten Flüssigkeit erreicht wird, so daß die Flüssigkeit innerhalb des Kanals 16 in turbulenter Strömung fließt. Mit 19 ist die schraube bezeichnet, mittels welcher die Platte 12 an der Platte 1 unter Anlage an die Enden 10 und 11 der Kerne 4, 6 der Elektromagnete 2, 3 in Anlage gehalten wird. Die Platte 13 ist mit der Platte 1 über durch Löcher 20 hindurchgesteckte Schrauben zusammengespannt.

Um zu vermeiden, daß zu behandelnde Flüssigkeit zu den Spulen 5, 7 der Elektromagnete 2, 3 gelangt, sind die Kerne 4, 6 an der die Enden 8, 9 aufweisenden Seite verjüngt, und über eine, nicht dargestellte, Dichtung in passende Bohrungen der Platte eingefügt. Die Gleitdichtung kann dabei jegliche herkömmliche Dichtung aufweisen.

Bei einer anderen Ausführungsform ist der Strömungskanal 16 an seiner den Elektromagneten 2, 3 zugewandten Wandung mit einer dünnen, nicht magnetisierbaren Folie 21 ausgekleidet, die die Stirnflächen 8, 9 der Kerne 4,6 der Elektromagnete 2,3 gegenüber dem Kanalinnenraum abdichtet.

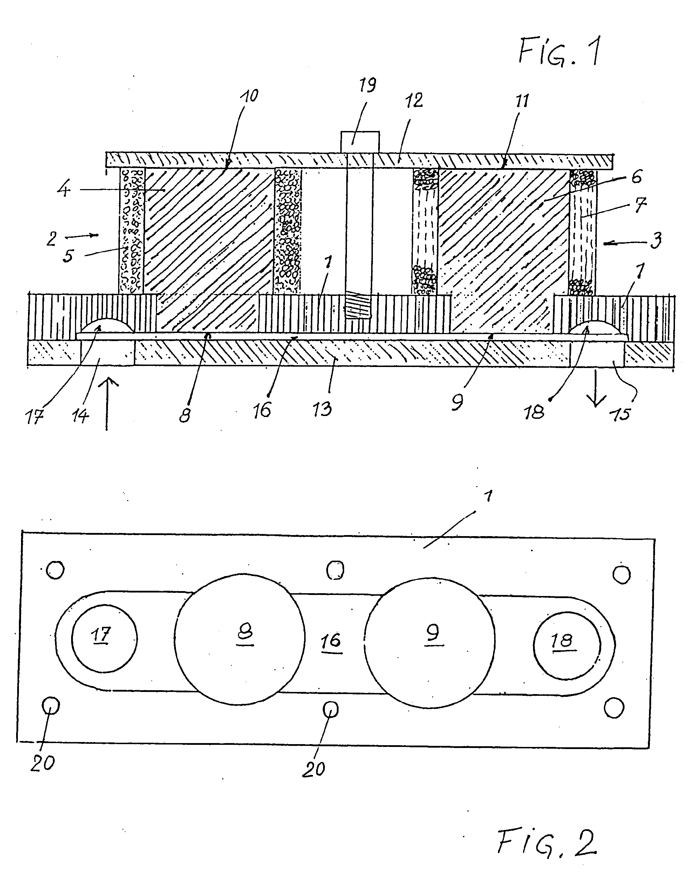

Wie aus Fig. 2 ersichtlich, weisen die Stirnflächen 8, 9 der Kerne 4, 6 der Elektromagnete 2, 3 größeren Durchmesser auf, als der Kanal 16 breit ist, so daß die gesamte zu behandelnde Flüssigkeit an den Kernen der Elektromagnete vorbeigeführt wird.

Es hat sich gezeigt, daß die Wirkung der Magnete dann erhöht werden kann, wenn auch die Platte 13 aus magnetisierbarem Material besteht, so daß also der Kraftlinienfluß innerhalb des Strömungskanals 16 weitgehend quer zur Strömung verläuft und innerhalb der Platte 13 zum nächsten Magnet weitergeleitet wird.

Wenn die Elektromagnete 2, 3 permanent mit gleichgerichteter Polung beaufschlagt werden, dann kann es zu einem Polarisieren der Flüssigkeit im Bereich der Magneten kommen, wodurch die Wirkung abgeschwächt wird. Es ist daher vorteilhaft, wenn die Polung der Magnete periodisch wechselt, wobei die Polungen aller Magnete, vorliegend beider Magnete, gleichzeitig wechseln, so daß dann, wenn beim Magnet 2 der der Flüssigkeit zugewandte Pol von Süd auf Nord wechselt, der der Flüssigkeit zugewandte Pol des Magneten 3 von Nord auf Süd wechselt.

Die besondere Wirksamkeit der erfindungsgemäßen Vorrichtung beruht darauf, daß mit wachsender Spannung des äußeren Magnetfeldes eine Präzession der einzelnen Hüllen und eine Polarisation der Elektronenwolken verstärkt wird. Letztere erlangen durch das induzierte magnetische Moment, das antiparallel zum äußeren Feld ausgerichtet ist, eine Deformierung durch die Veränderung der Energie der Wasserstoffbindungen. Die Zahl der zerrissenen Wasserstoffbindungen sowie die in Wechselwirkung stehenden Sauerstoffatome der angrenzenden Moleküle, die ihre vorhergehende Gleichgewichtsstellung verlieren, steigt.

Die Kernbindungsenergie der Wassermoleküle verdichtet sich, die Oberflächenspannung und die Viskosität erhöht sich und zieht eine Verminderung der Löslichkeit der Gase mit sich.

Die Energie der Wechselwirkung der Ionen mit den Wassermolekülen ist viel höher als die Energie der Wechselwirkung der Wassermoleküle miteinander. Deshalb ist ein Teil der Moleküle in nächster Umgebung dieses Ions mit diesem verbunden. Diese Erscheinung bezeichnet man als nähere Hydratation. Da das Ionenfeld infolge der Polarisation nicht nur die Struktur in den angrenzenden Molekülen zerstört, spricht man auch von einer entfernteren Hydratation.

Das äußere Feld hat den größten Einfluß auf die Ionen, weil die Zahlenwerte der diamagnetischen Suszeptibilität der Ionen viel höher sind als die der Wassermoleküle. Die Polarisation und die Veränderung der dichte der Elektronenwolken der Ionen und der Wassermoleküle bringe, wie eingangs erwähnt, eine Veränderung der Energie der Wechselwirkung der hydratierten Ionen mit den nächstgelegenen Wassermengen (fernere Hydratation), d.h. eine Veränderung der Hydratation der in Lösung befindlichen Stoffe und der Struktur der Lösung mit sich.

Solche Veränderungen der Struktur der Lösung und der Hydratation der in Lösung befindlichen Substanzen als Folge einer magnetischen Behandlung werden experimentell bestätigt durch die Bestimmung der Viskosität, der Oberflächenspannung, der elektrischen Leitfähigkeit, der Wasserstoff-Kennzahl, der Löslichkeit, der Geschwindigkeitskonstanten der Auflösung, der Wärmeeffekte bei der Auflösung von Substanzen der optischen Dichte usw. (näheres aus der Literatur).

Es geht daraus hervor, daß die auf das geladene Teilchen wirkende Kraft f durch das Verhältnis

$$f = kevH \sin \alpha,$$

wobei

K - der Koeffizient der Proportionalität,
e - Ladung des Teilchens,
v - Geschwindigkeit der Bewegung des Teilchens (des Flüssigkeitsstroms),
H - die Spannung des Magnetfeldes,
α - der Winkel zwischen der Richtung der Fließbewegung und der Richtung des Feldes ist,

bestimmt ist.

Aus der Gleichung geht hervor, daß die Wirkung des Feldes auf das geladene Teilchen dann ihr Maximum erreicht, wenn sich der Flüssigkeitsstrom in einer dem Feld gegenüber senkrechten Richtung bewegt.

Der Wirkungseffekt des Feldes auf die Ionen, ihre Hydratation, die Struktur der Lösung, die Verminderung der Kesselsteinbildung, ist auf die Flüssigkeitsgeschwindigkeit und die Magnetkraft und Einwirkung abgestimmt.

Die Lorentzkrat hat vertikal die höchste Einwirkungskraft auf sich bewegende Flüssigkeiten und ruft außerdem eine Asymmetrie der Hydrathüllen der Ionen hervor, was die Bildung von Ionenpaaren schafft und die Rolle von Kristallisationszentren übernimmt. Durch den (elektro)magnetisch-hydrodynamischen Effekt (Wirbel) wird die Bildung von Kristallisationszentren erleichtert. Hiermit sind die Voraussetzungen von Ionen-Assoziaten (Clusterbildung), deren Menge und Aggregationsgrad, der in Lösung befindlichen Stoffe und ihrer Konzentration gegeben. Besonders wichtig ist die Veränderung der Ionenhydratation, denn gerade Ionen mit verletzten Hydrathüllen können als Keime einer neuen Phase dienen. Eine Veränderung der Hydratation früher abgeschiedener Sedimente beim Kontakt derselben mit magnetisch aufbereitetem Wasser ist offenbar auch die Ursache für die Zerstörung alten Kesselsteins bei der Speisung von Kesseln mit Wasser, das einer magnetischen Aufbereitung unterzogen worden war. Die Bildung einer großen Zahl von Kristallzentren (Cluster) geht einher mit einer Erschöpfung der Lösung.

Der Erfolg einer magnetischen Aufbereitung wird demzufolge durch die Schaffung einer möglichst großen Zahl submikroskopischer Teilchen und Teilchen in kolloid-dispersem Stadium als Kristallisationszentren in der Flüssigkeit bewirkt.

Die Menge der Kristallisationszentren, deren Oberfläche die Heizfläche in einer Größenordnung übersteigt, die ein Vielfaches derselben beträgt, bestimmt auch im voraus die überwiegende Ausscheidung der Kesselsteinbildner in Form suspendierter Teilchen (Schlamm). Bei Erhitzen des Wassers findet ein Anwachsen der Kristallisationszentren und ein Vergrößerung der suspendierten Teilchen statt, die es gilt stabil zu halten, um Sekundärablagerungen zu vermeiden.

Die geometrische Anordnung des magnetischen Wasseraufbereiters und deren Poligkeit und Stärke sind daher von ausschlaggebender Wichtigkeit auf die Salze, wobei Salzgehalt und Salzzusammensetzung noch einmal einen Ausschlag auf die Einwirkung haben.

Durch die etwa 90grädige Ablenkung wird eine hydrodynamische Veränderung erzeugt und das zu behandelnde Medium wird flach über die 2 verkehrt gepolten, sehr intensiven Magnetfelder, die in einem berechneten Abstand eingeordnet sind, geleitet und wieder etwa 90grädig ausgeführt.

Durch eine, nicht dargestellte, Kretzschaltung zur Anspeisung der Magnete wird eine Spannungsverdoppelung erreicht, so daß auf einem Teil des Magnetpoles 100 Hertz Frequenz sind. Mittels dieser Anordnung der Magnetfeldstärke (exakt definiert) können Salz- und Wassermoleküle definiert magnetisiert werden und deren Frequenz den örtlichen Wasserstrukturgegebenheiten angepaßt werden. Es hat sich gezeigt, daß zwischen 16 und 200 Hertz die wirkungsvollste Anwendungsmöglichkeit besteht. Je Pol werden dabei Feldstärken von etwa 10.000 Gauss erzielt.

**Patentansprüche**

1. Vorrichtung zur magnetischen Behandlung von flüssigen Medien, bei welcher das Medium an einem oder mehreren in Strömungsrichtung hintereinanderliegenden Elektromagneten entlanggeführt ist, wobei der Einlaßkanal bzw. der Auslaßkanal für die Flüssigkeit quer zur Strömungsrichtung mündet, dadurch gekennzeichnet, daß die Kerne (4, 6) der Elektromagnete (2, 3), und damit deren Kraftfelder, quer zur Strömungsrichtung der Flüssigkeit angeordnet sind, wobei durch den Kanal (16) die Flüssigkeit in dünner Schicht an den Stirnflächen der Kerne (4, 6) der Elektromagnete (2, 3) vorbeiführbar ist.

2. Vorrichtung nach Anspruch 1, dadurch gekennzeichnet, daß die Elektromagnete (2, 3) an der dem Einlaßkanal (14) bzw. dem Auslaßkanal (15) gegenüberliegenden Wandung (1) angebracht sind, wobei in dieser Wandung (1), dem Einlaßkanal bzw. dem Auslaßkanal gegenüberliegend, Umlenkkammern (17, 18) angeordnet sind.

3. Vorrichtung nach Anspruch 1 oder 2, dadurch gekennzeichnet, daß die vom Strömungskanal der Flüssigkeit abgewandten Enden (10, 11) der Kerne (4, 6) der Elektromagnete (2, 3) durch eine Platte (12) aus magnetisierbarem Material verbunden sind.

4. Vorrichtung nach einem der Ansprüche 1 bis 3, dadurch gekennzeichnet, daß die den Einlaßkanal (14) und den Auslaßkanal (15) aufweisende Wandung (13) aus magnetisierbarem Material gefertigt ist.

5. Vorrichtung nach einem der Ansprüche 1 bis 4, dadurch gekennzeichnet, daß der Durchmesser der Kerne (4, 6) der Elektromagnete (2, 3) größer als die Breite des Kanals (16) ist.

6. Vorrichtung nach einem der Ansprüche 1 bis 5, dadurch gekennzeichnet, daß der das flüssige Medium vom Einlaßkanal (14) zum Auslaßkanal (15) führende Strömungskanal (16) an seiner den Elektromagneten (2, 3) zugewandten Wandung (1) mit einer dünnen, nicht magnetisierbaren Folie (21), die Stirnwände (8, 9) der Magnetkerne (4, 6) dicht überdeckend, ausgekleidet ist.

7. Vorrichtung nach einem der Ansprüche 1 bis 6, dadurch gekennzeichnet, daß die Elektromagnete (2, 3) über eine Einrichtung zum periodischen Polwechseln mit Strom beaufschlagbar sind.

## Claims

1. Apparatus for the magnetic treatment of liquid media, in which the media is lead along one or several electromagnets arranged successively in the direction of the flow, whereby the inlet duct or outlet duct for the liquid opens out across the direction of flow, characterized in that the cores (4, 6) of the electromagnets (2, 3), and thus their power fields, are disposed across the direction of the flow of the liquid, whereby the liquid can be lead through the duct (16) in a thin layer past the front faces of the cores (4, 6) of the electromagnets (2, 3).

2. Apparatus as claimed in claim 1, characterized in that the electromagnets (2, 3) are attached to the wall (1) that is opposite of the inlet duct (14) or the outlet duct (15), wherein in this wall (1) which is opposite of the inlet duct or outlet duct there are disposed deflection chambers (17, 18).

3. Apparatus as claimed in claim 1 or 2, characterized in that the ends (10, 11) of the cores (4, 6) of the electromagnets (2, 3) which are opposite to the flow duct of the liquid are connected by a plate (12) made from a magnetizable material.

4. Apparatus as claimed in one of the claims 1 to 3, characterized in that the wall (13) containing the inlet duct (14) and the outlet duct (15) is made from a magnetizable material.

5. Apparatus as claimed in one of the claims 1 to 4, characterized in that the diameter of the cores (4, 6) of the electromagnets (2, 3) is larger than the width of the duct (16).

6. Apparatus as claimed in one of the claims 1 to 5, characterized in that the flow duct (16) leading the liquid medium from the inlet duct (14) to the outlet duct (15) is coated on its wall (1) showing towards the electromagnets (2, 3) with a thin non-magnatizable foil (21) which tightly covers the front faces (8, 9) of the magnet cores (4, 6).

7. Apparatus as claimed in one of the claims 1 to 6, characterized in that the electromagnets (2, 3) are fed with current through a device for providing periodic alternation.

## Revendications

1. Dispositif pour le traitement magnétique de milieux liquides, où le milieu est conduit le long d'un ou de plusieurs électro-aimants agencés en série dans le sens d'écoulement, où le canal d'amenée et le canal d'évacuation du liquide débouchent transversalement au sens d'écoulement, caractérisé en ce que les noyaux (4, 6) des électro-aimants (2, 3) et donc également les champs magnétiques de ces derniers sont agencés transversalement au sens d'écoulement du liquide, où le liquide, en un film mince, peut étre guidé à travers le canal (16) au passage des faces des noyaux (4, 6) des électro-aimants (2, 3).

2. Dispositif selon revendication 1, caractérisé en ce que les électro-aimants (2, 3) sont agencés sur la paroi (1) opposée au canal d'amenée (14) et au canal d'évacuation (15), où des chambres de déviation (12, 18) sont agencées dans cette paroi (1), vis à vis du canal d'amenée et du canal d'évacuation.

3. Dispositif selon revendication 1 ou 2, caractérisé en ce que les extrémités (10, 11) des noyaux (4, 6) des électro-aimants (2, 3) opposées au canal d'écoulement du liquide sont reliées par une plaque (12) composée d'un matériau magnétisable.

4. Dispositif selon l'une des revendications 1 à 3, caractérisé en ce la paroi (13) comprenant le canal d'amenée (14) et le canal d'évacuation (15) est réalisée en un matériau magnétisable.

5. Dispositif selon l'une des revendications 1 à 4, caractérisé en ce que le diamètre des noyaux (4, 5) des électro-aimants (2, 3) est supérieur à la largeur du canal (16).

6. Dispositif selon l'une des revendications 1 à 5, caractérisé en ce que le canal d'écoulement (16) guidant le milieu liquide du canal d'amenée (14) vers le canal d'évacuation (15) est revêtu sur sa paroi (1) côté des électro-aimants (2, 3) d'un mince film (21) non-magnétisable couvrant solidement les parois de face (8, 9) des électro-aimants.

7. Dispositif selon l'une des revendications 1 à 6, caractérisé en ce que les électro-aimants (2, 3) peuvent être chargés de courant au moyen d'un dispositif de changement périodique de pôle.

FIG.1

FIG.2

7

FIG. 3